# EUROPEAN PATENT APPLICATION

(11) **EP 3 961 337 A1**
(43) Date of publication of application: **02.03.2022**
(21) Application number: 20193671.3
(22) Date of filing: 31.08.2020
(51) Int. Cl.: G05B 23/02

(54) **METHOD AND SYSTEM FOR MANAGING A PROCESS IN A TECHNICAL INSTALLATION**

(71) Applicant: Siemens Aktiengesellschaft, 80333 München (DE)
(72) Inventor: DOIPHODE, Manish, 560100 Bangalore (IN); MATTUMMAL VALAPPIL, Jidhu Mohan, 683578 Kochi, Kerala (IN); RICHARDSON, Renith, 560071 Bangalore, Karnataka (IN)
(74) Representative: Patentanwaltskanzlei WILHELM & BECK

(57) **Abstract**

A method of managing a process in a technical installation comprises receiving anomaly prediction data. The anomaly prediction data comprises image based anomaly prediction data and sensor based anomaly prediction data. The method comprising determining features corresponding to predicted anomaly from image based anomaly prediction data using trained feature extraction algorithm. The method comprises determining patterns from the sensor based anomaly prediction data using trained pattern extraction algorithm. The method comprises determining feature and pattern in pre-learned knowledge base substantially matching determined features and determined patterns corresponding to predicted anomaly. The feature and pattern correspond to a previously detected anomaly. The method comprises obtaining parameter values corresponding to matching feature and pattern. The parameter values are recommended to prevent predicted anomaly from occurring in technical installation. The method comprises configuring devices in technical installation using determined parameter values.

## Description

The present invention generally relates to monitoring systems and more specifically to a method and system for managing a process in a technical installation.

In a technical installation or a manufacturing set-up such as an automobiles manufacturing plant, electronic goods manufacturing plant, food and beverages industry, pharmaceutical industry or a chemical industry complex manufacturing or designing processes of various products are executed. Each such process includes several elements such as raw materials, ingredients, technical components or equipment. Each of these elements must operate in defined manner to achieve the final output, i.e. a product of an intended quality. Manufacturing set-ups or technical installation may face multiple challenges, such as managing an intended quality of a product. Poor quality of the end-product may increase recall rate of the products significantly, thereby impacting the throughput of the manufacturing setup. Additionally, poor quality of the product may also be detrimental to several consumers. Quality of a product may be severely dependent on the components or equipment deployed for the process in the technical installation.

Currently, several fault prediction systems are deployed in an industrial set-up to monitor the quality of the product and an operation of the ongoing processes in the technical installation. However, interpretability of such fault prediction models using deep learning-based techniques is unclear. Therefore, an operator of the technical installation is unaware of the parameters that influence the fault prediction in the technical installation. Furthermore, the operator relies unconditionally on the fault prediction models for decision making and accept or discard the product or stop the process in worse scenarios. This may cause several issues in the technical installation such as product rejection, untimely shutdown of the critical systems, wastage of time and resources thereby affecting the product reliability and plant efficiency.

Therefore, there is a need for a method and system that can manage the process in the technical installation to improve the quality of the product and efficiency of the technical installation and provide an interpretability of automated actions performed in the technical installation in human understandable format.

The object of the invention is to provide a method and a system for managing a process in a technical installation that is capable of monitoring the processes of the technical installation and quality of the product in real-time, thereby increasing the accuracy and efficiency of the output of the process.

In the following description, the solution according to the invention is described with respect to the claimed system as well as with respect to the claimed method. Features, advantages or alternative embodiments herein can be assigned to the other claimed objects and vice versa. In other words, claims for the system can be improved with features described or claimed in the context of the method. In this case, the functional features of the method are embodied by objective units of the system.

The object of the invention is to provide a method of managing a process in a technical installation. The method comprises receiving anomaly prediction data associated with the technical installation from one or more anomaly prediction models. The anomaly prediction data is indicative of at least one anomaly predicted in the technical installation. The anomaly prediction data comprises image based anomaly prediction data and sensor based anomaly prediction data. The method comprises determining features corresponding to the predicted anomaly in the technical installation from the image based anomaly prediction data using a trained feature extraction algorithm. The method comprises determining patterns corresponding to the predicted anomaly in the technical installation from the sensor based anomaly prediction data using a trained pattern extraction algorithm. The method comprises determining at least one feature and at least one pattern in a pre-learned knowledge base substantially matching the determined features and the determined patterns corresponding to the predicted anomaly. The at least one feature and at least one pattern corresponds to a previously detected anomaly. The previously predicted anomaly is analogous to the predicted anomaly. The method comprises obtaining one or more parameter values corresponding to the matching feature and pattern from the pre-learned knowledge base. The one or more parameter values are recommended to prevent the predicted anomaly from occurring in the technical installation. The method comprises configuring one or more devices in the technical installation using the determined parameter values.

The method of determining the features corresponding to the predicted anomaly in the technical installation from the image based anomaly prediction data using the trained feature extraction algorithm comprises inputting the image based anomaly prediction data associated with the technical installation from one or more anomaly prediction models to an input node of the trained feature extraction algorithm. The method comprises extracting one or more characteristics in the image based anomaly prediction data. The one or more characteristics correspond to visual anomalies in the image based anomaly prediction data. The method comprises outputting the features corresponding to the predicted anomaly based on the extracted one or more characteristics at an output node of the trained feature extraction algorithm.

The method of determining patterns corresponding to the anomaly in the technical installation from the sensor based anomaly prediction data using a trained pattern extraction algorithm comprises inputting sensor based anomaly prediction data associated with technical installation from one or more anomaly prediction models to an input node of the trained pattern extraction algorithm. The method comprises extracting one or more characteristics in the pattern based anomaly prediction data. The one or more characteristics correspond to sensory anomalies in the sensor based anomaly prediction data. The method comprises outputting the patterns corresponding to the predicted anomaly based on the extracted one or more characteristics at an output node of the trained pattern extraction algorithm.

The method of configuring the one or more devices in the technical installation using the determined parameter values comprises determining the one or more devices in the technical installation based on the predicted anomaly data and the obtained parameter values. The method comprises configuring the one or more devices in the technical installation using the determined parameter values.

The method of configuring the one or more devices in the technical installation using the determined parameter values comprises configuring digital twin of the one or more devices in the technical installation using the determined parameter values. The method comprises simulating a behavior of each of the one or more devices in a simulation environment using the configured digital twin. The method comprises analyzing the results of the simulation of the behavior of the one or more devices. The method comprises determining whether the predicted anomaly in the technical installation is addressed based on the analyzed results. If the predicted anomaly is addressed, the method comprises configuring the one or more devices in the technical installation using the determined parameter values. If the predicted anomaly is not addressed, the method comprises computing new parameter values for configuring the one or more devices in the technical installation.

The method further comprises configuring the one or more devices in the technical installation using the computed parameter values.

The method further comprises outputting the recommendations for configuring the one or more devices on a graphical user interface, wherein the recommendation comprises parameter values.

The invention relates in one aspect to a system of managing a process in a technical installation. The system comprise one or more processing units, a pre-learned knowledge base comprising technical information pertaining to technical installations and processes performed therein, and a memory communicatively coupled to the one or more processing units, the memory comprising an anomaly prevention module configured to perform the aforementioned method steps.

The invention relates in one aspect to a system of managing manufacturing process in a technical installation. The system comprising one or more servers remotely located from a technical installation, one or more sensors communicatively coupled to the one or more servers, wherein the one or more sensors comprises image sensors and physical parameter sensors, and one or more user devices 108 communicatively coupled to the one or more servers, wherein the one or more servers comprise computer readable instructions, which when executed by the one or more servers cause the one or more servers to perform the aforementioned method.

The invention relates in one aspect to a computer program product comprising machine readable instructions, that when executed by a processing unit, cause the processing unit to perform the aforementioned method.

The object of the present invention is achieved by a computer-readable medium, on which program code sections of a computer program are saved, the program code sections being loadable into and/or executable in a system to make the system execute the method described above when the program code sections are executed in the system.

The realization of the invention by a computer program product and/or a computer-readable medium has the advantage that already existing management systems can be easily adopted by software updates in order to work as proposed by the invention.

The computer program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The present invention is further described hereinafter with reference to illustrated embodiments shown in the accompanying drawings, in which:
- FIG 1: is a schematic representation of an industrial set-up, in accordance with an embodiment of the present invention;
- FIG 2: illustrates a block diagram of a cloud platform for implementing one or more embodiments of the present invention, in accordance with an embodiment of the present invention;
- FIG 3: illustrates a flowchart of a method of managing a process in a technical installation, in accordance with an embodiment of the present invention;
- FIG 4: illustrates a flowchart depicting steps of a method of determining the features corresponding to the predicted anomaly in the technical installation from the image based anomaly prediction data using the trained feature extraction algorithm, in accordance with an embodiment of the present invention;
- FIG 5: illustrates a flowchart depicting steps of a method of determining patterns corresponding to the anomaly in the technical installation from the sensor based anomaly prediction data using a trained pattern extraction algorithm, in accordance with an embodiment of the present invention; and
- FIG 6: illustrates a flowchart depicting steps of a method for configuring the one or more devices in the technical installation using the determined parameter values, in accordance with an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

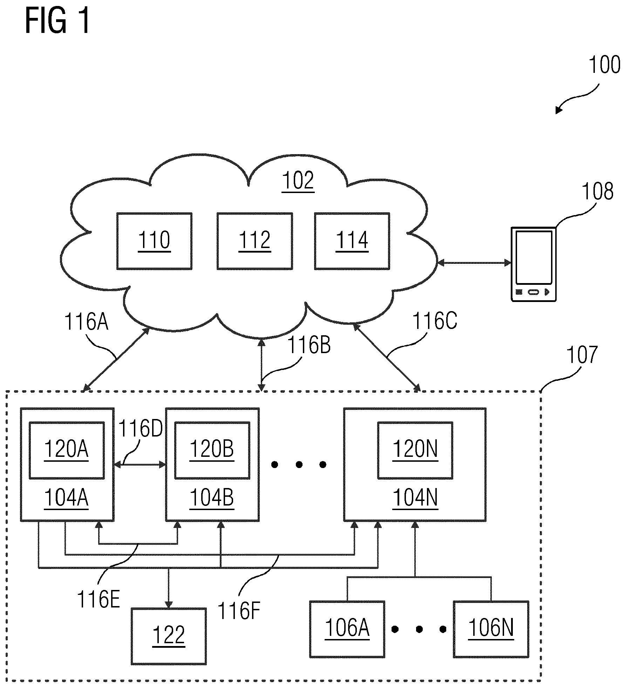

FIG 1 is a schematic representation of an industrial set-up 100, in accordance with an embodiment of the present invention. The industrial set-up 100 comprises a cloud platform 102, one or more technical installations 107 connected to the cloud platform 102, and a user device 108 associated with a user of the technical installation 107. The technical installation 107 can be a manufacturing facility, etc. The technical installation 107 may be geographically distributed. Each of the technical installations 107 may comprise one or more devices 104A-N. The one or more devices 104A-N may include different types of assets (equipment, machines, sensors, actuators, robotic arms, unmanned aerial vehicles (UAVs)etc.) located in the technical installation 107. Each of the one or more devices 104AN is capable of communicating with the cloud platform 102 using respective communication interfaces 120A-N via communication links 116A-C via the Internet or a network. Also, the one or more devices 104A-N are capable of communicating with each other using respective communication interfaces 120A-N via communication links 116D to 116F. The communication links 116D to 116F can be wired or wireless links.

Also, the technical installation 107 may comprise an anomaly prediction device 122 that is configured to obtain data from cameras and sensors associated with the one or more devices 104A-N. The anomaly prediction device 122A is configured to analyze the data and predict anomalies in the one or more devices 104A-N using machine learning models. The anomaly prediction device 122 comprises anomaly prediction models to generate anomaly prediction data. The anomaly prediction data as obtained from the anomaly prediction device 122 may be transmitted to the cloud platform 102 for preventing the predicted anomaly from occurring in the technical installation 107.

Also, in the technical installation 107, the one or more devices 104A-N may be connected to assets 106A-N in the technical installation 107. Such assets 106A-N are not capable of directly communicating with the cloud platform 102. As shown in FIG. 1, the device 104N is connected to assets 106A-N via wired or wireless network. For example, the device 104N is an loT gateway and the assets 106A-N may be robots, sensors, actuators, machines, or other field devices which communicate to the cloud platform 102 via the loT gateway 104N.

Each of the devices 104A-N is configured for communicating with the cloud platform 102 via the communication interfaces 120A-N. The components 104A-N may have an operating system and at least one software program for performing desired operations in the technical installation 107. Also, the devices 104A-N may run software applications for collecting, and pre-processing plant data (process data) and transmitting the pre-processed data to the cloud platform 102.

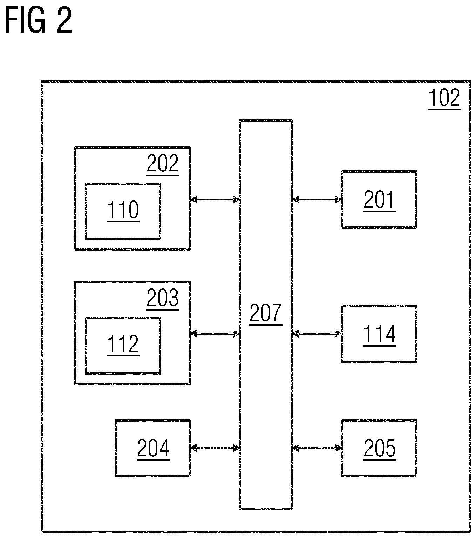

The cloud platform 102 can be a cloud infrastructure capable of providing cloud-based services such as data storage services, data analytics services, data visualization services, etc. based on the plant data. The cloud platform 102 can be part of public cloud or a private cloud. The cloud platform 102 may enable data scientists/software vendors to provide software applications/firmware as a service, thereby eliminating a need for software maintenance, upgrading, and backup by the users. The software application can be full application, or software patch. The cloud platform 102 is further illustrated in greater detail in FIG 2.

In an exemplary operation, the anomaly prediction device 122 may predict an anomaly associated with the one or more devices 104A-N. The cloud platform 102 comprises an anomaly prevention module 110 is configured to receive the anomaly prediction data from the anomaly prediction device 122. The anomaly prevention module 110 is configured to determine features corresponding to the predicted anomaly in the technical installation from the image based anomaly prediction data using a trained feature extraction algorithm. Further, the anomaly prevention module 110 is configured to determine patterns corresponding to the predicted anomaly in the technical installation from the sensor based anomaly prediction data using a trained pattern extraction algorithm. The anomaly prevention module 110 is configured to determine at least one feature and at least one pattern in a pre-learned knowledge base substantially matching the determined features and the determined patterns corresponding to the predicted anomaly. The at least one feature and at least one pattern corresponds to a previously detected anomaly. The previously predicted anomaly is analogous to the predicted anomaly. The anomaly prevention module 110 is configured to obtain one or more parameter values corresponding to the matching feature and pattern from the pre-learned knowledge base, wherein the one or more parameter values are recommended to prevent the predicted anomaly from occurring in the technical installation 107. Further, the anomaly prevention module 110 is configured to configure one or more devices in the technical installation 107 using the determined parameter values.

FIG. 2 illustrates a block diagram of the cloud platform 102 for implementing one or more embodiments of the present invention. The cloud platform 102 comprises a processing unit 201, a memory 202, a storage unit 203, a network interface 114, a standard interface or bus 207. The cloud platform 102 may be an exemplary embodiment of a system. The system 102 can be a (personal) computer, a workstation, a virtual machine running on host hardware, a microcontroller, or an integrated circuit. As an alternative, the system 102 can be a real or a virtual group of computers (the technical term for a real group of computers is "cluster", the technical term for a virtual group of computers is "cloud").

The processing unit 201, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 201 may also include embedded controllers, such as generic or programmable logic devices or arrays, application specific integrated circuits, single-chip computers, and the like. In general, a processing unit 201 can comprise hardware elements and software elements. The processing unit 201 can be configured for multithreading, i.e. the processing unit 201 can host different calculation processes at the same time, executing the either in parallel or switching between active and passive calculation processes.

The memory 202 may be volatile memory and non-volatile memory. The memory 202 may be coupled for communication with the processing unit 201. The processing unit 201 may execute instructions and/or code stored in the memory 202. A variety of computer-readable storage media may be stored in and accessed from the memory 202. The memory 202 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 202 includes an anomaly prevention module 110 stored in the form of machine-readable instructions on any of the above-mentioned storage media and may be in communication to and executed by processing unit 201. When executed by the processing unit 201, the anomaly prevention module 110 causes the processing unit 201 to manage a process in the technical installation 107. The anomaly prevention module 110 may further cause the processing unit to simulate results of one or more parameters associated with the technical installation 107. Method steps executed by the processing unit 201 to achieve the abovementioned functionality are elaborated upon in detail later in the description.

The storage unit 203 may be a non-transitory storage medium which stores a pre-learned knowledge base 112. The pre-learned knowledge base 112 may store an event history of the one or more components 104A-N in the technical installation 107. 114. The cloud platform 102 may further comprise an input unit 204 and an output unit 205. The input unit 204 may include input devices such as keypad, touch-sensitive display, camera (such as a camera receiving gesture-based inputs), etc. capable of receiving input signals such as requests for generating recommendations, manually entering new parameter values when required and the like. The output unit 205 may be a device with a graphical user interface displaying recommendations having parameter values and a reason for predicated anomaly in human understandable format, simulation results, and the like. The bus 207 acts as interconnect between the processing unit 201, the memory 202, the storage unit 203, the input unit 204, and the output unit 205.

Those of ordinary skill in the art will appreciate that the hardware depicted in FIG 2 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

A system in accordance with an embodiment of the present disclosure includes an operating system employing a graphical user interface. The operating system permits multiple display windows to be presented in the graphical user interface simultaneously with each display window providing an interface to a different application or to a different instance of the same application. A cursor in the graphical user interface may be manipulated by a user through the pointing device. The position of the cursor may be changed and/or an event such as clicking a mouse button, generated to actuate a desired response.

One of various commercial operating systems, such as a version of Microsoft Windows^{™}, a product of Microsoft Corporation located in Redmond, Washington may be employed if suitably modified. The operating system is modified or created in accordance with the present disclosure as described.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of systems, and is not limited to any particular distributed architecture, network, or communication protocol.

Disclosed embodiments provide systems and methods for managing a manufacturing process in a technical installation 107. In particular, the systems and methods may identify the quality of the product during the manufacturing process in the technical installation 107.

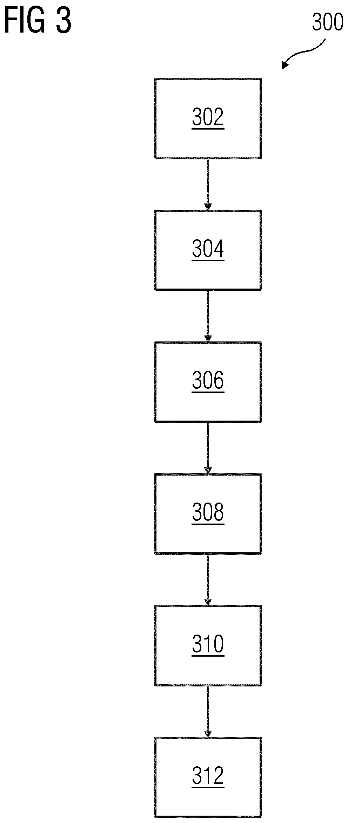

FIG 3 illustrates a flowchart of a method 300 of managing a process in a technical installation 107, in accordance with an embodiment of the present invention. At step 302, anomaly prediction data associated with technical installation 107 is received from one or more anomaly prediction models. The technical installation 107 can include industrial plants, sites, monitoring and control areas, and the like. In an embodiment, the process corresponds to manufacture or design of a product in the technical installation 107. The product may be for example, automobiles and/or automobiles parts, mechanical components, electronics and electrical equipment and products, food and condiments, chemicals, beverages, pharmaceutical drugs, etc. The anomaly prediction data is received from the anomaly prediction models deployed in the technical installation 107. In an embodiment, the anomaly prediction models are configured to receive data for current events in the technical installation 107 and determining whether the data for the current events is within operational limits. Further, the anomaly prediction models are configured to determine whether an anomaly is to exist in near future, for example after a few cycles of operation in the technical installation 107 and then generate anomaly prediction data when an anomaly is predicted in the technical installation 107. The anomaly prediction data is indicative of the anomalies in the technical installation 107.

The anomaly prediction data comprises image based anomaly prediction data and sensor based anomaly prediction data. The image based anomaly data may be received from image based sensors such as cameras. Herein, the cameras may be configured to acquire visual anomalies such as smoke, electrical sparks in the devices, anomalies in the product while it is being manufactures, anomalies in placement and position of various components in the technical installation 107 such as robotic arms, automated machines, and the like. The image based anomaly prediction data may also include other parameters that influence process in the technical installation 107 such as quantity of raw material used, quality of raw material used and so forth. The sensor based anomaly prediction data may be obtained from sensors for obtaining physical parameters that influence processes in the technical installation 107. The sensor based anomaly prediction data may include physical parameters such as temperature, pressure, humidity, components involved in the process, etc. Such one or more parameters may be received from one or more sensors deployed in the technical installation 107. The sensors may include, for example, temperature sensor, pressure sensor, vibration sensor, and the like. It will be appreciated that real-time anomaly prediction data is received from the one or more sensors enabling identification of real-time status of the processes in the technical installation 107.

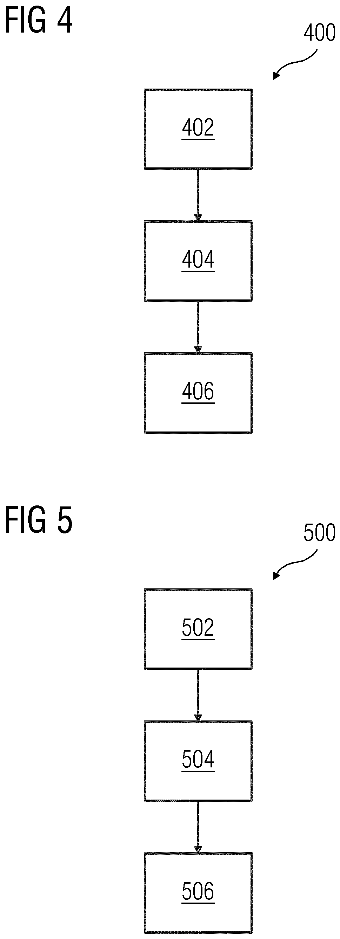

At step 304, features corresponding to the predicted anomaly in the technical installation 107 are determined from the image based anomaly prediction data using a trained feature extraction algorithm. The features may correspond to distinctive characteristics in the image based prediction anomaly data. The features may include discrepancies in the images that would not have occurred under normal operation of the technical installation 107. For example, a loose wire, a misplaced machine, tool or robot, spark, smoke in image data correspond to features. The feature extraction algorithm may be trained on a machine learning model that can learn a model or a feature based on existing information or knowledge and predict or estimate output using input of new information or knowledge. Herein, the feature extraction algorithm infers an extraction model given a set of training data. In general, each individual sample of the training data is a pair containing a dataset (e.g., one or more images or imaging data from the image based anomaly prediction data) and a desired output value or dataset. The feature extraction model analyzes the training data and produces a descriptor function that involves convolving pixel data set. The descriptor function, once derived through training, is capable of reasonably extracting the correct feature values. In an example, the descriptor function is capable of extracting features that may be associated with an anomaly based on the training data. Furthermore, the one or more machine learning models are trained using a large number of training dataset of image based anomalies that might occur in the technical installation 107. The feature extraction algorithm accurately determines features in the image based prediction anomaly data that are responsible for causing an anomaly in the technical installation 107. The method steps describing the working of the feature extraction algorithm is explained in greater detail in FIG 4.

At step 306, patterns corresponding to the predicted anomaly in the technical installation 107 are determined from the sensor based anomaly prediction data using a trained pattern extraction algorithm. The patterns may correspond to distinctive characteristics in the pattern based prediction anomaly data. The patterns may include distortions in the signals received from physical parameter sensors that would not have occurred under normal operation of the technical installation. For example, current spike, voltage surge, temperature fluctuations, and other signal distortions that are not within operating limits under normal operation of the technical installation 107. The pattern extraction algorithm may be trained on a machine learning model that can learn a feature based on existing information or knowledge and predict or estimate output using input of new information or knowledge. Herein, the pattern extraction algorithm infers an extraction model given a set of training data. In general, each individual sample of the training data is a pair containing a dataset (e.g., one or more signal patterns or temperature data from the sensor based anomaly prediction data) and a desired output value or dataset. The pattern extraction model analyzes the training data and produces a variance function that involves convolving signal data set. The variance function, once derived through training, is capable of reasonably extracting the correct feature values pertaining to distortions in signal based on the training data. Furthermore, the one or more machine learning models are trained using a large number of training dataset of image based anomalies that might occur in the technical installation 107. The pattern extraction algorithm determines patterns in the sensor based prediction anomaly data that are responsible for causing an anomaly in the technical installation 107. The method steps describing the working of the pattern extraction algorithm is explained in greater detail in FIG 5.

At step 308, at least one feature and at least one pattern is determined in a pre-learned knowledge base 112 substantially matching the determined features and the determined patterns corresponding to the predicted anomaly. The at least one feature and at least one pattern corresponds to a previously detected anomaly. The previously detected anomaly is analogous to the predicted anomaly. The pre-learned knowledge base 112 comprises a plurality of pre-linked data objects indicative of features and patterns pertaining to one or more devices and attributes of the one or more devices. It should be noted that each of pre-linked data object is connected using one or more paths. The pre-learned knowledge base 112 includes plant specific information, planning data pertaining to manufacturing, process specific information, and general manufacturing or process information in the form of data objects that may be linked to each other in a hierarchical manner. Additionally, the pre-learned knowledge base 112 also comprises image specific data such as visual defects in products, visual defects in machinery and devices, manufacturing devices that are linked with each of the visual defects, features linked with each of the visual defects and so forth. The pre-learned knowledge base 112 also comprises sensor specific data such as electrical surges in devices and equipment, voltage fluctuations in devices, short circuits in devices, temperature and heat fluctuations in devices, patterns linked with each of the sensor defects and so forth. Additionally, the pre-learned knowledge base also includes standard procedure data that may be specific to a process in the technical installation 107. The standard procedure data includes a set of pre-defined rules, a standard operating procedure, a pre-defined activity or a process, and the like. Additionally, the pre-learned knowledge base 112 also includes standard parameter values associated with one or more devices in the technical installation 107. Furthermore, the pre-learned knowledge base 112 also comprises data pertaining to previously detected anomalies and the actions that were initiated to resolve the previously detected anomaly. The pre-learned knowledge base 112 also comprises features and patterns pertaining to previously detected anomalies that may have occurred in the technical installation 107, or there is a probability of occurrence of such anomalies in the technical installation 107. It will be appreciated that the pre-learned knowledge base 112 may be comprised of a knowledge graph including a plurality of nodes that are linked to one another based on a technical information and a semantic information. The knowledge graph may be structured in a hierarchical manner such that the prediction anomaly data is connected to features and patterns, and the feature and patterns are further connected to one or more devices 104A-N, previously predicted anomalies, historical parameters and so forth. It will also be appreciated that the pre-learned knowledge base 112 is a dynamic information set that is constantly updated to add new data objects and links or paths between data objects as and when any new information pertaining to the technical installation 107 or general process information is available.

Pursuant to the present embodiment, the at least one feature and the at least one pattern is determined in the pre-learned knowledge base 112 substantially matching the determined features and the determined patterns corresponding to the predicted anomaly. The features and patterns as determined from the feature extraction algorithm and the pattern extraction algorithm respectively is compared with a plurality of features and a plurality of features in the pre-learned knowledge base 112. Further, a relation may be established between the determined features and patterns and analogous features and patterns by tracing links in the pre-learned knowledge base 112. The at least one feature and the at least one pattern which correspond to a previously detected anomaly is determined in the pre-learned knowledge base 112 based on the established relations.

At step 310, obtaining one or more parameter values corresponding to the matching feature and pattern from the pre-learned knowledge base 112. The one or more parameter values are recommended to prevent the predicted anomaly from occurring in the technical installation 107. In an embodiment, the matching features and patterns correspond to the previously detected anomaly in the technical installation 107. The pre-learned knowledge base 112 is further utilized to determine parameter values associated with the previously detected anomaly and parameter values associated with correction of the detected anomaly. Furthermore, the one or more parameter values corresponding to the previously resolved anomaly are obtained and recommended to prevent the predicted anomaly from occurring in the technical installation 107. In an embodiment, the one or more parameters may affect the processes in the technical installation 107 if the parameters are not capable of preventing the predicted anomaly. Therefore, the one or more parameters are optimally determined to prevent the predicted anomaly from occurring in the technical installation 107.

At step 312, configuring one or more devices 104A-N in the technical installation 107 using the determined parameter values. Configuration of the one or more devices 104A-N may include, but not be limited to, modifying the raw materials of the manufacturing process, modifying a quantity of the raw materials associated with the process, configuring physical parameters associated with the process and/or configuring one or more devices 104A-N of the technical installation 107 associated with the process. Such configuration may be performed dynamically by a processing unit associated with the technical installation 107. Advantageously, configuring the one or more devices 104A-N of the technical installation 107 enables managing the process in the technical installation 107. In an embodiment, the one or more devices 104A-N are associated with electrical controllers, automated controllers, switches, PLC controllers that may be configured according to the one or more parameter values such as a current value, a voltage value, a temperature value, a pressure value, position value for certain robotic controllers, a flow value, a speed of an equipment such as speed of conveyor belt, and so forth. In an embodiment, electrical signals are generated corresponding to the obtained one or more parameters that may be fed to controllers associated with the one or more devices 104A-N to prevent the predicted anomaly from occurring in the technical installation 107. In an embodiment, the one or more devices 104A-N in the technical installation 107 is determined based on the predicted anomaly data and the obtained parameter values. The one or more devices 104A-N as linked to the determined features and patters are determined from the pre-learned knowledge base 112.

FIG 4 illustrates a flowchart depicting steps of a method 400 of determining the features corresponding to the predicted anomaly in the technical installation 107 from the image based anomaly prediction data using the trained feature extraction algorithm, in accordance with an embodiment of the present invention. At step 402, the image based anomaly prediction data associated with technical installation 107 from one or more anomaly prediction models is inputted to an input node of the trained feature extraction algorithm. The image based anomaly data comprises visual anomalies such as smoke, electrical sparks in the devices 104A-N and associated components, anomalies in the product while it is being manufactured, anomalies in placement and position of various components in the technical installation 107 such as robotic arms, automated machines, and the like. The image based anomaly prediction data may also include other parameters that influence process in the technical installation 107 such as quantity of raw material used, quality of raw material used and so forth. Such image base anomaly data is inputted at the to the input node. At step 404, one or more characteristics in the image based anomaly prediction data is extracted. The one or more characteristics correspond to visual anomalies in the image based anomaly prediction data. The one or more characteristics may be aberrations in the image data that may not be present in the image data under normal operation of the technical installation 107. The one or more characteristics may include, but are not limited to, a change in color, hue, texture, edges in comparison to training dataset. At step 406, the features corresponding to the predicted anomaly are extracted based on the one or more characteristics are outputted at an output node of the trained feature extraction algorithm.

FIG 5 illustrates a flowchart depicting steps of a method 500 of determining patterns corresponding to the anomaly in the technical installation 107 from the sensor based anomaly prediction data using a trained pattern extraction algorithm, in accordance with an embodiment of the present invention. At step 502, sensor based anomaly prediction data associated with technical installation 107 from one or more anomaly prediction models is inputted to an input node of the trained pattern extraction algorithm. The sensor based anomaly prediction data may include physical parameters such as temperature, pressure, humidity of the one or more devices 104A-N involved in the process. The sensor base anomaly may also include unexpected signal values such as current and voltage in the one or more devices 104A-N. At step 504, one or more characteristics in the pattern based anomaly prediction data are extracted. The one or more characteristics correspond to sensory anomalies in the sensor based anomaly prediction data. The sensory anomalies may include, but are not limited to, signal distortions, or signal spikes in the received signal values that should not be present in the signal data under normal operating conditions of the technical installation 107. At step 506, the patterns corresponding to the predicted anomaly based on the extracted one or more characteristics is outputted at an output node of the trained pattern extraction algorithm.

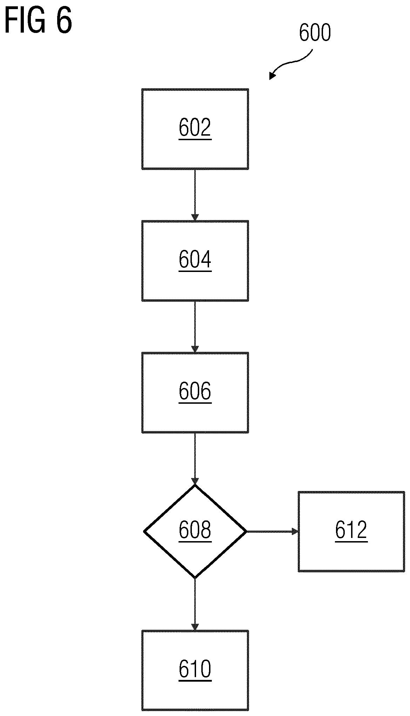

FIG 6 illustrates a flowchart depicting steps of a method 600 of configuring the one or more devices 104A-N in the technical installation 107 using the determined parameter values, in accordance with an embodiment of the present invention. At step 602, a digital twin of the one or more devices 104A-N in the technical installation 107 is configured using the determined parameter values. In an embodiment, a digital twin is a virtual model or a simulation model of the technical installation 107 that is capable of simulating one or more functions and/or operations of the one or more devices 104A-N deployed in the technical installation 107. The digital twin may have access to all data associated with the technical installation 107 based on which replication of one or more functions may be performed by the digital twin. Simulating one or more parameters enables production early prediction of anomaly in the technical installation 107 and a means to prevent the predicted anomaly from occurring in the technical installation 107. Therefore, advantageously, necessary actions may be taken when an anomaly is predicted in the technical installation 107 to prevent a degraded quality of a product to be manufactured or an entire breakdown of the technical installation 107 that may affect the throughput of the technical installation 107.

At step 604, a behavior of each of the one or more devices 104A-N is simulated in a simulation environment using the configured digital twin. The behavior of the one or more devices 104A-N corresponds to operating parameters of the one or more devices 104A-N. The operating parameters may include, current, voltage, speed, temperature pressure and other physical parameters that affect the operation of the one or more devices 104A-N in the simulation environment. The simulation environment is a virtual model comprising a digital replica of the technical installation 107. Each of the one or more devices 104A-N are configured to operate in an optimal manner in the simulation environment. At step 606, the results of the simulation of the behavior of the one or more devices 104A-N are analyzed. The result of the process is determined based on the simulated one or more parameters. Such results reflect the anomaly free operation of the technical installation 107. In an embodiment, the result may include the real-time performance of the process, the characteristics associated with the product being manufactured, an extent of deviation from a standard quality/expected quality, etc.

At step 608, it is determined whether the predicted anomaly in the technical installation 107 is addressed based on the analyzed results or not. In an embodiment, the results of the simulation may be successful or unsuccessful. In an example, if the result of the simulation is successful, then the predicted anomaly is addressed and if the result of the simulation unsuccessful, then predicted anomaly is not addressed. At step 610, the one or more devices 104A-N are configured in the technical installation 107 using the determined parameter values, if the predicted anomaly is addressed. Based on successful simulation results, the one or more devices 104A-N are configured based on the obtained one or more parameters. At step 612, new parameter values are computed for configuring the one or more devices 104A-N in the technical installation 107 if the predicted anomaly is not addressed. In an embodiment, when the results of simulation are unsuccessful, the obtained one or more parameter values are discarded, and new parameter values are computed for configuring the one or more devices 104A-N. In an embodiment, the new parameters are computed using a trained machine learning model. For example, the machine learning model is a random forest regression model. The machine learning model is configured to receive obtained parameter values and determine reference values from the pre-learned knowledge base 110 based on the parameter values. The reference values may be, for example, values of one or more parameters captured historically during resolving previously detected anomaly. The trained machine learning model may generate multiple decision trees using the one or more reference values as input. The reference values are adjusted to obtain new parameter values such that the new parameter values may address the predicted anomaly. In another embodiment, the new parameter values may be entered by an operator in the technical installation 107 using the graphical user interface. In an embodiment, the one or more devices in the technical installation 107 are configured using computed new parameter values.

In an embodiment, the recommendations for configuring the one or more devices on a graphical user interface, wherein the recommendation comprises parameter values. The recommendations are generated in human understandable format using the pre-learned knowledge base 112. The recommendation may be generated by utilizing relations between features, patterns, one or more devices 104A-N and general information relating to processes in the technical installation 107. The relations between determined patterns and features, determined parameters, determined devices and general information relating to the process are transformed into human understandable format comprising interpretations and reasoning behind the predicted anomaly for presenting to an operator/user of the user device 108. The operator associated with a user device 108 may be notified in case an anomaly is predicted in the technical installation 107. For example, a notification signal is generated to the user device 108 when an anomaly is predicted by anomaly prediction models. Further, the one or more parameter values that are successfully derived to address the predicted anomaly are also provided to the graphical user interface along with the interpretation and reason behind a cause of the predicted anomaly and the recommendations that may pe performed to resolve the predicted anomaly. Advantageously, the recommendations provide inputs to the user of the technical installation 107 on the measures to be taken to prevent the predicted anomaly from occurring and thereby improve the efficiency of the technical installation 107.

An advantage of the invention is that the predicted anomalies are prevented from occurring in the technical installation 107. Therefore, a probability of discrepancy or anomaly in the product is mitigated as the predicted anomalies are resolved even before they affect the product or the process in the technical installation 107. Yet another advantage of the invention is that quality of the end product meets standard requirements that may be defined for the manufacturing process. Another advantage of the invention is that wastage of resources such as raw materials and time is reduced. Furthermore, an interpretability of a root cause of the predicted anomaly and the generated recommendations in human understandable format provide an insight to the operator into the process in the technical installation 107.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope and spirit of the invention in its aspects.

### Bezugszeichenliste / List of reference numbers

100 Industrial set-up
102 Cloud platform
104 Network
106A-N Assets
108 User device
110 Anomaly prevention module
112 Pre-learned knowledge base
114 Network interface
116A-F Communication links
120A-N Communication Interfaces
122 Anomaly prediction device
201 Processing unit
202 Memory
203 Storage unit
204 Input unit
205 Output unit
207 Bus
300 Method of managing a process in a technical installation
400 Method of determining the features corresponding to the predicted anomaly in the technical installation from the image based anomaly prediction data using the trained feature extraction algorithm
500 Method of determining patterns corresponding to the anomaly in the technical installation from the sensor based anomaly prediction data using a trained pattern extraction algorithm
600 Method of configuring the one or more devices in the technical installation using the determined parameter values.

## Claims

1. A method of managing a process in a technical installation (107), the method comprising:
receiving anomaly prediction data associated with technical installation (107) from one or more anomaly prediction models, wherein the anomaly prediction data is indicative of at least one anomaly predicted in the technical installation (107), wherein the anomaly prediction data comprises image based anomaly prediction data and sensor based anomaly prediction data;
determining features corresponding to the predicted anomaly in the technical installation (107) from the image based anomaly prediction data using a trained feature extraction algorithm;
determining patterns corresponding to the predicted anomaly in the technical installation (107) from the sensor based anomaly prediction data using a trained pattern extraction algorithm;
determining at least one feature and at least one pattern in a pre-learned knowledge base (112) substantially matching the determined features and the determined patterns corresponding to the predicted anomaly, wherein the at least one feature and at least one pattern corresponds to a previously detected anomaly, wherein the previously predicted anomaly is analogous to the predicted anomaly;
obtaining one or more parameter values corresponding to the matching feature and pattern from the pre-learned knowledge base (112), wherein the one or more parameter values are recommended to prevent the predicted anomaly from occurring in the technical installation; and
configuring one or more devices (104A-N) in the technical installation (107) using the determined parameter values .

2. The method according to claim 1, wherein determining the features corresponding to the predicted anomaly in the technical installation (107) from the image based anomaly prediction data using the trained feature extraction algorithm comprises:
inputting the image based anomaly prediction data associated with technical installation (107) from one or more anomaly prediction models to an input node of the trained feature extraction algorithm;
extracting one or more characteristics in the image based anomaly prediction data, wherein the one or more characteristics correspond to visual anomalies in the image based anomaly prediction data; and
outputting the features corresponding to the predicted anomaly based on the extracted one or more characteristics at an output node of the trained feature extraction algorithm.

3. The method according to claim 1, wherein determining patterns corresponding to the anomaly in the technical installation (107) from the sensor based anomaly prediction data using a trained pattern extraction algorithm comprises:
inputting sensor based anomaly prediction data associated with technical installation (107) from one or more anomaly prediction models to an input node of the trained pattern extraction algorithm;
extracting one or more characteristics in the pattern based anomaly prediction data, wherein the one or more characteristics correspond to sensory anomalies in the sensor based anomaly prediction data; and
outputting the patterns corresponding to the predicted anomaly based on the extracted one or more characteristics at an output node of the trained pattern extraction algorithm.

4. The method according to claim 1, wherein configuring the one or more devices (104A-N) in the technical installation (107) using the determined parameter values comprises:
determining the one or more devices in the technical installation based on the predicted anomaly data and the obtained parameter values; and
configuring the one or more devices (104A-N) in the technical installation (107) using the determined parameter values.

5. The method according to claim 4, wherein configuring the one or more devices (104A-N) in the technical installation (107) using the determined parameter values comprises:
configuring digital twin of the one or more devices (104A-N) in the technical installation (107) using the determined parameter values;
simulating a behavior of each of the one or more devices (104A-N) in a simulation environment using the configured digital twin;
analyzing the results of the simulation of the behavior of the one or more devices (104A-N);
determining whether the predicted anomaly in the technical installation (107) is addressed based on the analyzed results;
if the predicted anomaly is addressed, configuring the one or more devices (104AN) in the technical installation (107) using the determined parameter values; and
if the predicted anomaly is not addressed, computing new parameter values for configuring the one or more devices (104A-N) in the technical installation (107).

6. The method according to claim 5, further comprising configuring the one or more devices (104A-N) in the technical installation (107) using the computed parameter values.

7. The method according to claim 5, further comprising outputting the recommendations for configuring the one or more devices (104A-N) on a graphical user interface, wherein the recommendation comprises parameter values.

8. A system (102) of managing a process in a technical installation (107), the system (102) comprising:
one or more processing units (201);
a pre-learned knowledge base (112) comprising technical information pertaining to technical installations (107) and processes performed therein; and
a memory (202) communicatively coupled to the one or more processing units (201), the memory comprising an anomaly prevention module (110) configured to perform the method steps as claimed in claims 1 to 7.

9. A system (102) of managing manufacturing process in a technical installation (107), the system comprising:
one or more servers remotely located from a technical installation (107);
one or more sensors communicatively coupled to the one or more servers, wherein the one or more sensors comprises image sensors and physical parameter sensors; and
one or more user devices (108) communicatively coupled to the one or more servers, wherein the cloud platform (102)comprise computer readable instructions, which when executed by the one or more servers cause the one or more servers to perform the method according to claims 1 to 7.

10. A computer program product comprising machine readable instructions, that when executed by a processing unit (201), cause the processing unit (201) to perform a method according to claims 1-7.

11. A computer readable medium on which program code sections of a computer program are saved, the program code sections being loadable into and/or executable in a system to make the system execute the method steps according to any of the claims 1 to 7 when the program code sections are executed in the system.
